# EUROPEAN PATENT APPLICATION

(11) **EP 2 509 188 A2**
(43) Date of publication of application: **10.10.2012**
(21) Application number: 12160470.6
(22) Date of filing: 21.03.2012
(51) Int. Cl.: H02J 7/04

(54) **System and method to extend operating life of rechargable batteries using battery charge management**

(30) Priority: 06.04.2011 US 201113080736
(71) Applicant: Deere & Company, Moline, IL 61265-8098 (US)
(72) Inventor: Finamore, Peter, Weddington, NC North Carolina 28104 (US); Musser, James W., Cary, NC North Carolina 27513 (US); Anderson, Noel W., Fargo, ND North Dakota 58102 (US); Johnson, David A., Cary, NC North Carolina 27513 (US)
(74) Representative: Holst, Sönke

(57) **Abstract**

A battery charging management technique and apparatus to manage battery charge in order to extend the operating life of the battery while meeting the energy needs of both scheduled and unscheduled discharges of the battery.

## Description

The present invention relates generally to charging techniques for rechargeable batteries, and more particularly to a technique for managing battery charge of rechargeable batteries to extend the life of rechargeable batteries.

Lithium rechargeable batteries provide the best (economic) current power density of production battery technologies, but are a significant cost of battery operated machines. Because of the expense of the batteries, it is desirable to extend the operating life between replacements of such batteries.

Research has shown that lithium battery life may be extended by storing the batteries at a lower charge and also storing and using the batteries at a lower temperature. Storing a lithium battery fully charged at a high temperature is therefore undesirable, and possibly the worst thing that can be done when storing such a battery.

Service robot or machine users, one example being robotic mower users, typically use robots in two ways: (1) a pre-scheduled use, and (2) an immediate use. The first case is easily handled in that the service robot or machine may be stored in a low state of charge and then charged just before use (also known as just-in-time). The second case is harder because it is not predictable and the user may have an expectation of how long the service robot or machine will operate with the existing charge. For example, as a demonstration for visitors, the service robot or machine may need to run for only a few minutes. As another example, for an unplanned human event or sudden change in weather forecast, the service robot or machine may need to run for an extended period of time on short notice.

An embodiment of the present invention provides a battery charging management technique and apparatus to manage battery charge in order to extend the operating life of the battery while meeting the energy needs of both scheduled and unscheduled discharges of the battery.

Accordingly, a system for managing charge in a battery is provided, where the system comprises a battery, a measuring component to measure a state of charge of the battery, an adjusting component to adjust the state of charge of the battery to a target charge level, a determining component to determine a temperature, and a setting component to set the target charge level based on the temperature.

Also provided is a machine that comprises a battery, a measuring component to measure a state of charge in the battery, an acquiring component to determine a current temperature and an estimated future temperature of a machine worksite, and a scheduling component to schedule operation of the machine at the machine worksite based on the state of charge, the current temperature and the estimated future temperature.

Also provided is a method for managing charge in a battery, comprising steps of determining an ambient air temperature proximate the battery and adjusting an amount of charge used to charge the battery based on the ambient air temperature.

The features, functions, and advantages may be achieved independently in various embodiments of the present invention or may be combined in yet other embodiments in which further details may be seen with reference to the following description and drawings, wherein:
Figure 1 depicts a lithium-ion rechargeable battery which an illustrative embodiment may use and manage the charging thereof;
Figure 2 is an overall system block diagram in accordance with an illustrative embodiment;
Figure 3 is a flow diagram showing a battery charging management process in accordance with an illustrative embodiment; and
Figure 4 is a flow diagram showing machine usage scheduling being used to manage battery charging in accordance with an illustrative embodiment.

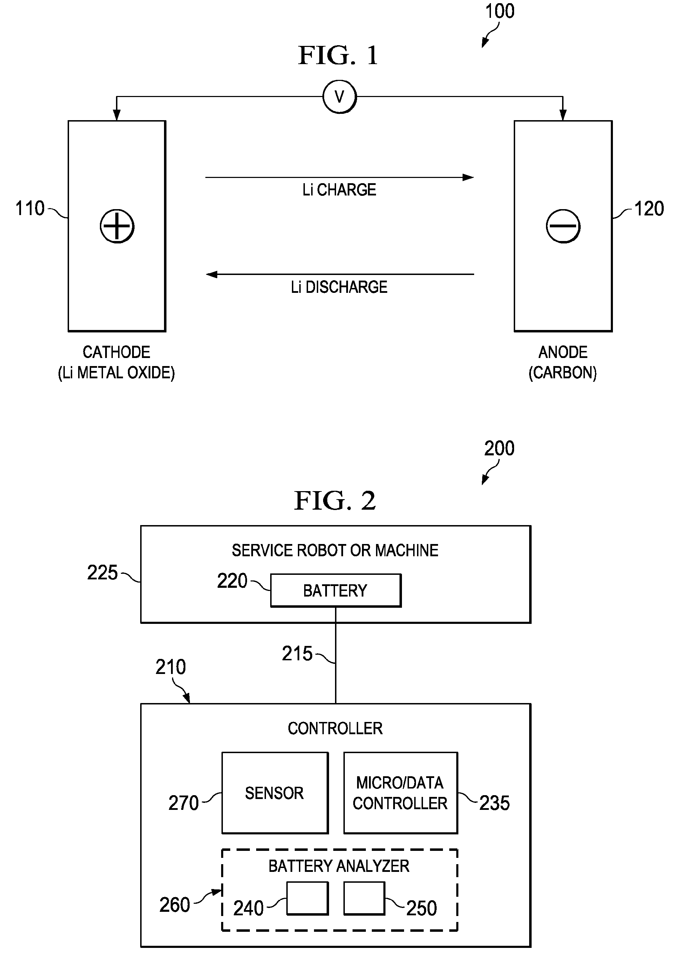

Similar to the lead and nickel-based architecture, a lithium-ion battery as shown at 100 of Figure 1 uses a cathode 110 (positive electrode), an anode 120 (negative electrode) and an electrolyte (not shown) as conductor. The cathode may typically be a metal oxide and the anode consists typically of porous carbon or other substrate holding lithium at near zero oxidation state. During discharge, the ions flow from the anode to the cathode through the electrolyte and separator; charging reverses the direction and the ions flow from the cathode to the anode. As the cell charges and discharges, ions shuttle between the cathode (positive electrode) and anode (negative electrode). On discharge, the anode undergoes oxidation, or loss of electrons, and the cathode sees a gain of electrons. Charging reverses the movement of electrons. Charging cycles may significantly impact the life of lithium-ion batteries. Battery operation at temperature extremes (high or low) reduce efficiency and completeness of electron transfer and may result in battery capacity loss. Specific battery configurations have different specific control guidelines within this framework.

Automated service robots or machines, such as a robotic mower, vacuum or snow-blower, typically have a mode of operation that is battery-powered using rechargeable batteries. High performance batteries that provide the most economic or best current power density, such as lithium batteries, may be a relatively expensive component of such service robots or machines. It would thus be desirable to extend the battery life of such rechargeable batteries in order to mitigate the overall service robot or machine operating cost over the life of the service robot or machine. Preferably and as further described below, a technique and apparatus are provided to manage the charging of the battery that takes into account the current charge state of the battery as well as operating conditions such as the ambient air temperature proximate to the battery. The techniques described herein are particularly useful to accommodate various uncertainties that may exist with respect to usage of the service robot or machine, and accommodates two diverse usage scenarios: (1) pre-scheduled usage, and (2) immediate usage.

Turning now to Figure 2, there is shown at 200 a block diagram of the overall system for managing battery charge for a rechargeable battery. A controller 210 is electrically coupled at 215 to a battery 220. Controller 210 may or may not be mounted in a service robot or machine 225 during storage and/or charging. Likewise, battery 220 may or may not be mounted in the service robot or machine 225 during storage and/or charging. In the preferred embodiment, battery 220 of Figure 2 is a lithium-ion battery. Controller 210 includes a micro/data controller 235 that includes an integrated data processor and memory for performing data processing according to programming code maintained in the memory. Controller 210 also includes a circuit or component 240 for measuring the state of charge of the battery 220. A standard amp-hour meter may be used for such battery state of charge measuring. Controller 210 also includes a circuit or component 250 for adjusting the battery state of charge - both up (charge) and down (discharge). In a preferred embodiment, the rate at which the charge is changed may be controlled to keep the battery temperature below a threshold temperature. This also helps maximize battery life. Without limitation, the control may consist of one of stopping battery charge adjustment when the battery reaches the threshold temperature, allowing the battery to cool to a second threshold temperature value, and then resuming charge adjustment (e.g. thermostat); selecting a charge change rate based on at least one of battery temperature or ambient temperature; or selecting an adjustment on/off adjustment duty cycle based on at least one of a battery temperature or an ambient temperature. The charge adjustment may be scheduled based on a forecast ambient temperature.

In the preferred embodiment, a conglomerate battery analyzer 260 that includes a battery tester, charger and discharger is used to provide the circuitry/component for both measuring and charging/discharging. One such representative battery analyzer is the Cadex C7000 C-Series Battery Analyzer available from Cadex Electronics Inc., Richmond, BC, Canada. Per the inventive features to be further described herein, the battery state of charge is adjusted to a target charge level that is determined based on various environmental and usage factors. Controller 210 also includes a sensor 270 for determining the temperature of the environment around the battery, such as the ambient air temperature. Alternatively, the temperature of the generalized location of the battery may be used, such as using a zip code or address for the battery location to query a weather tracking database, either via a wired or wirelessly network connection (not shown), such as the one provided by an internet website of the United States government's National Oceanic and Atmospheric Administration (NOAA) branch of the Department of Commerce. In addition, future predicted weather statistics are preferably obtained from such a weather tracking database to facilitate machine scheduling usage, as further described below.

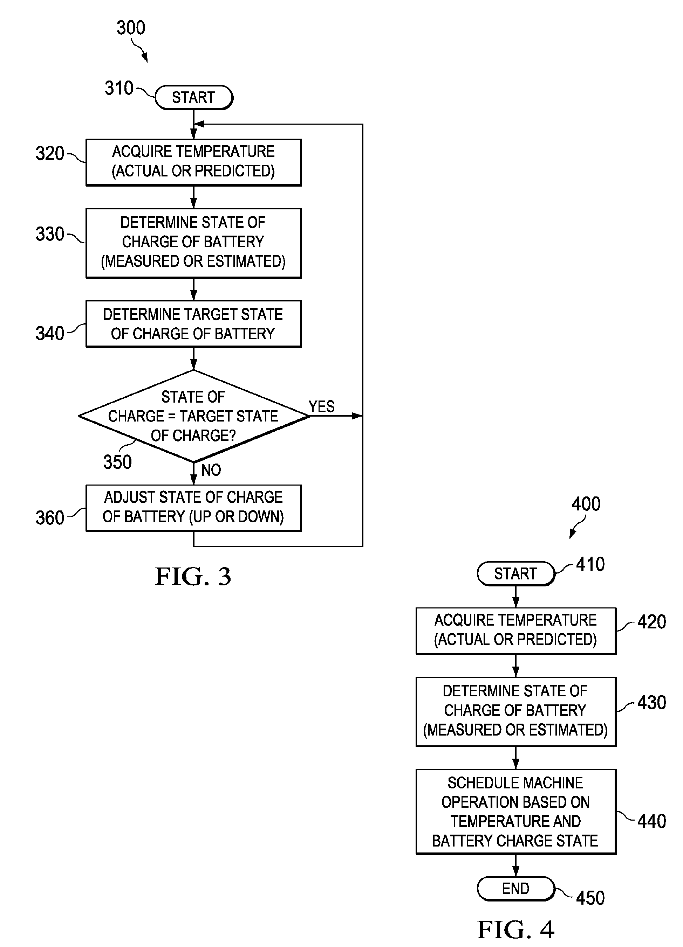

Turning now to Figure 3, there is shown at 300 a flowchart of a process for managing a battery's state of charge. Processing begins at 310, and proceeds to step 320 where the local temperature is determined. Such local temperature may be an actual measured temperature that is measured by a sensor such as sensor 270 of Figure 2, or an estimated local temperature as retrieved from a weather database, as previously described. The current battery state of charge is determined at 330. The current battery state of charge may be the actual measured state of charge that is obtained using the previously described measuring circuit/component 240 of Figure 2. In an alternative embodiment, the current battery state of charge may be an estimated state of charge of the battery that is determined by any number of methods, including coulomb-counting with high-voltage and low-voltage corrections for determining the full and empty battery conditions. The target battery state of charge is determined at 340. The target battery state of charge is also referred to herein as the target charge level. The target charge level is preferably based on actual or projected operating characteristics and/or environmental conditions of the battery and/or the worksite of the service robot. A determination is then made at 350 as to whether the current battery state of charge is equal to the target battery state of charge. If so, processing continues to 320 to repeat the battery charge management process. If not, processing continues to 360 where the adjusting component (circuit/component 250 of Figure 2) is used to adjust the battery charge level. Processing then continues to 320 to repeat the battery charge management process. It should be noted that the particular ordering of steps 320, 330 and 340 may be modified to be performed in a different order, and there may also be a delay/pause introduced between the adjusting step 360 and the cycle repeating at 320 to allow for an anticipated time for the battery to reach the desired target charge level.

The target charge level that is used as a threshold at step 350 of Figure 3 when charging/discharging a battery is a variable value that is set based upon multiple operating and/or environmental characteristics. For example, such target charge level may be set based on an estimated ambient temperature of the battery when in storage, or the ambient air temperature proximate to the battery when in use. The operation of the battery may be unrestricted within determined temperature range that is specified for a specific battery type as integrated into a specific machine application (-10C to 35C, for example). There are battery control rules that modify battery charge and discharge behavior that become active in defined temperature zones (35 to 45C; >45C; or -10 to -20C as examples). Rate of charge/discharge is restricted according to the determined temperature, as scaled to avoid cell damage and life optimization. The level of charge at completion is also temperature dependent, and varies with battery architecture, where the final charge level is reduced when higher temperatures are noted or expected. These temperature rules modify the state charge logic that is described in the sections that follow.

As another example, if there is a pre-set scheduled future use, it is desirable to store the battery in a state of not being fully charged, and preferably the charge should optimally be approximately 40% of full charge, until the time needed for usage. The battery would then be fully charged just-in-time for the scheduled future usage.

A historic pattern of unscheduled uses may also be used to predict the next unscheduled future usage (e.g., a mower is generally used on the weekends, and sits idle during weekdays), where the battery is maintained at a relatively low charge and then fully charged just-in-time for the predicted future unscheduled usage.

A period of non-use exceeding a threshold may also be used to establish the target charge level. For example, if a mower has sat idle for 14 days, such 14 day threshold may be used to change the target charge level to a fully charged state with it being anticipated that the machine will soon be used once the non-use threshold has been met.

A future use may be scheduled, where the target charge level is maintained at a relatively low level until such scheduled future use, where the future use is based on a future state of a worksite (for example, grass growth, floor dirtiness, driveway snow depth, etc.). The battery would then be fully charged just-in-time for the scheduled future usage.

The target charge level may need to be regularly maintained and/or adjusted based on an anticipated seasonal non-use (such as a snow-blower in the summertime or a mower in the wintertime) and the self-discharge rate of the battery, using similar techniques to those described above. The self-discharge rate could, if not regularly monitored and maintained, over-discharge the battery during storage, resulting in a permanent reduction in the battery capacity and useful life.

The target charge level may also be based on a table that indicates battery charge loss as a function of the state of charge of the battery and the storage temperature of the battery, such as is shown below in Table 1.

**TABLE 1 - Permanent Capacity Loss versus Storage Conditions**

| Storage Temp. | 40% Charge | 100% Charge |
|---|---|---|
| | | |
| 0 °C | 2% loss after 1 year | 6% loss after 1 year |
| 25°C | 4% loss after 1 year | 20% loss after 1 year |
| 40 °C | 15% loss after 1 year | 35% loss after 1 year |
| 60°C | 25% loss after 1 year | 40% loss after 3 months |

As previously alluded to, each battery formulation has its own footprint or characteristics for charge depletion based on charging/discharging times and temperature, and the above table characteristics are only one example of a wide array of possibilities as the techniques described herein are fairly independent of a specific battery configuration and can be applied to a wide variety of architectures. A typical arrangement for a consumer product would be strings of cells 6 to 14 in series. A representative architecture contains two parallel strings of 10 cells in series and has a voltage of between 32 and 40 volts when charged. For larger products, the series strings may be arranged up to 100 cells with voltages from approximately 320 to 400 V. The sensitivity to heating and the need for cooling is dependent on the cell type and structure, the arrangements of cells, the packaging (provisions for heat removal), and of course the charge and discharge duty cycle. For example, each technology would have its own curve similar to that defined in the above Table 1, and a manufacturer would pick a point on the knee of curve similar to that described in the following example. If the battery owner doesn't like that selection, they can override it by selecting another mode that may include a different life/availability point on the curve.

As an example, the data in Table 1 may suggest 30°C as a threshold temperature given the increase in permanent capacity loss at 40% charge. In many parts of the United States during the summer, nighttime temperatures are below this threshold while daytime temperatures are above it. Since the battery runs warmer than the ambient air, the battery threshold will be set to correspond to a lower temperature, 24°C in this example. The appropriate value for a given battery and product may be empirically determined by instrumenting the product for measuring battery and ambient temperature to develop the relationship during operation and charging. Simulation or any other appropriate technique may also be used. It may be beneficial to include other factors in defining the relationship including without limitation dewpoint, wind speed, or battery cooling system effectiveness.

Assume the battery is in an autonomous lawn mower product which is scheduled to run for three hours per day, starting no earlier than 8:00 AM. On a particular day, the mower may operate from 8:00 AM to 11:00 AM with the ambient temperature below 24°C. It may operate again on the next day from 8:00 AM to 11:00 AM with the ambient temperature under 24°C. If the recharging takes, for example, six hours, it would be complete between 2:00 AM and 8:00 AM on this second day. The forecast temperature during this period might be under 24 °C and is also the minimum for the period between scheduled mowings.

The target charge level may also be selected based upon an operating mode selection made by an operator/facilitator of the service robot or machine. For example, there may be a switch selector on the service robot or machine where human input may select between multiple operating modes: (1) battery life maximization (set the target charge level to a relatively low value), (2) unscheduled use readiness (set the target charge level to a relatively high value), and (3) winter hibernation (set the target charge level to a relatively low value during the winter when not in use, and a relatively high value during other times when expected to be in use).

Continuing the example above, suppose there is rain forecast for the morning of the third day, and the home owner wants a mowing session completed prior to the rain. In this case, the owner may select "unscheduled use readiness". The battery would charge from 11:00 AM to 5:00 PM on the second day. The mower may then operate from 5:00 PM to 8:00 PM that evening. Parts of the charging period and all of the mowing period are above 24 °C in this case.

Since lithium-ion batteries may suffer significant adverse reactions if they are discharged too low, in an alternative embodiment an alarm is provided that is activated if the detected battery state of charge reaches an alarm-triggering threshold. For example, both a minimum voltage threshold and the rate of voltage may be used to trigger the alarm. The control logic accelerates or advances the alarm when the rate of voltage decline is higher, or delays the alarm if the rate of voltage decline is slower. The control logic may also optionally take into account a temperature modifier. If the detected battery state of charge drops below the alarm triggering threshold, an alarm is triggered by the controller to notify a user of the undesired battery charge state. The alarm may be an audio alert, a visual alert or transmitting a message to a message receiving device using a wired or wireless network connection. Of course, the alarm triggering threshold is set with enough cushion (such as 20% greater than the actual damage threshold) to give the operator time to mitigate the low charge state prior to actual damage occurring to the battery.

Turning now to Figure 4, there is shown at 400 another embodiment where the scheduling of usage of a service robot or machine is performed based on the detected battery state of charge and environmental conditions at the worksite of the service robot. Processing begins at 410, and proceeds to step 420 where the local temperature is acquired. Such acquired local temperature may be an actual measured temperature that is measured by a sensor, such as sensor 270 of Figure 2, or an estimated local temperature as retrieved from a weather database, as previously described. In addition, future weather predictions are also obtained, including predicted temperatures at the worksite/location of desired machine operation. The current battery state of charge is determined at 430. The current battery state of charge may be the actual measured state of charge that is obtained using the previously described measuring circuit/component 240 of Figure 2. In an alternative embodiment, the current battery state of charge may be an estimated state of charge of the battery, as previously described. The operation of the service robot or machine containing the battery that the battery charge was determined for is then scheduled at 440. The usage of such service robot or machine is scheduled in order to minimize the ambient temperature experienced by the battery during operation in order to prolong the life of the battery while ensuring that the battery has an adequate charge so that the service robot or machine may perform its scheduled task. For example, if the future temperatures are predicted to be warmer than the current temperature, the service robot or machine may be scheduled to operate as soon as the battery is fully charged. If the future temperatures are predicted to be cooler than the current temperature, such as a cooler morning tomorrow rather than a current hot afternoon, the service robot or machine may be scheduled to operate at that time, with a full-charging of the battery being scheduled to be completed just-in-time prior to such desired cooler morning usage. The current state of charge may also be immediately lowered to an optimum storage value to extend the operating life of the battery.

The ambient temperature-based scheduling also takes into account any operational constraints placed on the service robot or machine, such as, the floor needs cleaning at least once every three (3) days but not sooner than one (1) day from a previous cleaning, or the lawn needs mowing at least once every ten (10) days but not sooner than five (5) days from a previous mowing. Such frequency of usage windows ensures that the machine is operated within given timing constraints with respect to a previous operation of the machine. Processing ends at 450.

As only one example of such operational constraints and future usage, some homeowners may choose to mow their lawn on a Thursday or Friday such that the lawns are groomed for weekend usage or enjoyment. The robotic device may be programmed to be fully charged (as modified by temperature - actual and/or expected/predicted or other modifiers) for use on a given day of the week or bi-weekly in similar fashion to programming a TV recorder to record a recurring TV program. A moisture sensor or report of impending weather may defer or cancel a specific state-of-charge plan. Such adaptive scheduling of service robots is further described in pending patent application serial # 12/683,205 entitled Adaptive Scheduling of a Service Robot that is assigned to Deere & Company and filed on January 6, 2010, which is hereby incorporated by reference as background material. For example, if a grass height model indicates it is approaching time to mow the lawn, a battery life extension process as described herein may dictate mowing two mornings rather than a morning and a hot afternoon.

Current and predicted rain, snow and other extenuating environmental factors may also be used in determining when to schedule machine usage to not only extend battery life, but to protect the machine from adverse weather elements other than temperature.

Thus, as described above, an embodiment of the present invention provides a battery charging management technique and apparatus to manage battery charge in order to extend the operating life of the battery while meeting the energy needs of both scheduled and unscheduled discharges.

## Claims

1. A system for managing charge in a battery comprising:
a measuring component configured to measure a state of charge of the battery;
an adjusting component configured to adjust the state of charge of the battery to a target charge level;
a determining component configured to determine a temperature; and
a setting component configured to set the target charge level based on the temperature.

2. The system of claim 1, wherein the target charge level is set based on at least one of a storage battery ambient temperature estimate in storage; a usage battery ambient temperature estimate in use; a pre-set scheduled future use, a historic pattern of unscheduled use; a period of non-use exceeding a threshold value; a scheduled future use based on a future state of a machine worksite; an anticipated seasonal non-use wherein the target level is determined by at least one of an estimated non-use duration or self-discharge rate; a table indicating battery life loss as a function of state of charge and ambient temperature; and a human input selecting between at least two modes selected from battery life maximization, unscheduled use readiness, and winter hibernation automatic charge state setting.

3. The system of claim 1, wherein the adjusting component is operable for adjusting the state of charge both up and down from a current state of charge of the battery.

4. The system of claim 3, wherein a rate of adjusting the state of charge is controlled to prevent battery temperature from exceeding a threshold level.

5. The system of claim 1 further comprising:
the battery.

6. The system of claim 5 further comprising:
a service robot, wherein the battery is configured to use with the service robot.

7. The system of claim 1, wherein the measuring component, the adjusting component, the determining component, and the setting component are located in a controller.

8. The system of claim 7, wherein the controller comprises an integrated data processor and memory for performing data processing according to programming code maintained in the memory.

9. The system of claim 8 in which an alerting signal is generated by the controller in response to the battery approaching a state of low charge which would cause damage to the battery.

10. The system of claim 9, wherein the alerting signal comprises at least one of an audio alert, a visual alert, and a message transmitted to a message receiving device.

11. The system of claim 1, wherein the determining component is one of a temperature determining component and a network component that accesses a weather tracking database.

12. The system of claim 11, wherein the temperature determining component comprises at least one of a battery temperature sensor, an ambient temperature sensor, and a thermometer.

13. A machine comprising:
a battery;
a measuring component to measure a state of charge in the battery;
an acquiring component to determine a current temperature and an estimated future temperature of a machine worksite; and
a scheduling component to schedule operation of the machine at the machine worksite based on the state of charge, the current temperature and the estimated future temperature.

14. The machine of claim 13 further comprising a selecting component which allows an operator to choose between two or more operating modes including an operating mode which maximizes battery life.

15. The machine of claim 13, wherein the operation of the machine is scheduled to minimize an ambient temperature experienced by the battery in order to prolong battery life of the battery while meeting an operational constraint of the machine, wherein the operational constraint is preferably a frequency of usage window and the frequency of usage window in particular specifies a minimum and maximum time period for when the operation of the machine is scheduled and wherein the minimum and maximum time period is preferably with respect to a time of previous operation of the machine.
